# EUROPEAN PATENT APPLICATION

(11) **EP 4 693 964 A1**
(43) Date of publication of application: **11.02.2026**
(21) Application number: 24193811.7
(22) Date of filing: 09.08.2024
(51) Int. Cl.: H04L 1/00, H04L 1/1867

(54) **METHODS FOR RELIABLE TRANSMISSION OF UPLINK SCHEDULING TRANSMISSION REQUESTS FOR CSI REPORTING INITIATED BY THE UE**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

The disclosure relates to a user equipment, a network node device, and respective methods for a user equipment and a network node. More specifically, the user equipment comprises a transceiver and a circuitry. The transceiver, in operation, transmits a transmission request for reporting an UE-initiated channel state information, CSI, report to a network node. The circuitry, in operation, determines, in a first determination, whether the transmission request is successful or not, determines, in a second determination, based on the first determination, whether to retransmit the transmission request.

## Description

### BACKGROUND

### 1. Technical Field

The present disclosure is directed to methods, devices and articles in communication systems, such as 3GPP communication systems.

### 2. Description of the Related Art

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved UE-initiated CSI reporting procedure.

In an embodiment, the techniques disclosed here feature an apparatus (e.g. a user equipment, UE). The apparatus comprises a transceiver and circuitry. The transceiver, in operation, transmits a transmission request for reporting an UE-initiated channel state information, CSI, report to a network node. The circuitry, in operation, determines, in a first determination, whether the transmission request is successful or not, determines, in a second determination, based on the first determination, whether to retransmit the transmission request.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN,
- **Fig. 3**: illustrates a simplified and exemplary implementation of a set of synchronization signal blocks distributed in a half-frame,
- **Fig. 4**: illustrates several beams and the corresponding SSB index, SSB1-SSB8, and how the beams are transmitted by the gNB in a beam-sweeping manner,
- **Fig. 5**: illustrates a signaling diagram for CSI measurement and reporting,
- **Fig. 6**: is a block diagram of a communication system in accordance with exemplary embodiments of the present disclosure;
- **Fig. 7**: is a block diagram of exemplary circuitry of a user equipment in accordance with exemplary embodiments of the present disclosure;
- **Fig. 8**: is a block diagram of exemplary circuitry of a network node in accordance with exemplary embodiments of the present disclosure;
- **Fig. 9**: is a flow chart showing method steps for a user equipment for handling a transmission request for reporting an UE-initiated CSI report in accordance with exemplary embodiments of the present disclosure;
- **Fig. 10**: is a flow chart showing method steps for a network node for handling a transmission request for reporting an UE-initiated CSI report in accordance with exemplary embodiments of the present disclosure;
- **Fig. 11**: is a flow chart showing method steps for a user equipment for handling a transmission request for reporting an UE-initiated CSI report in accordance with an exemplary implementation of the present disclosure;
- **Fig. 12**: is a flow chart showing method steps for a network node for handling a transmission request for reporting an UE-initiated CSI report in accordance with an exemplary implementation of the present disclosure;
- **Fig. 13**: is a signaling diagram illustrating an exemplary exchange between the UE and the gNB for an exemplary implementation of the handling of a transmission request for an UE initiated CSI report.

### DETAILED DESCRIPTION

### 5G NR system architecture and protocol stacks

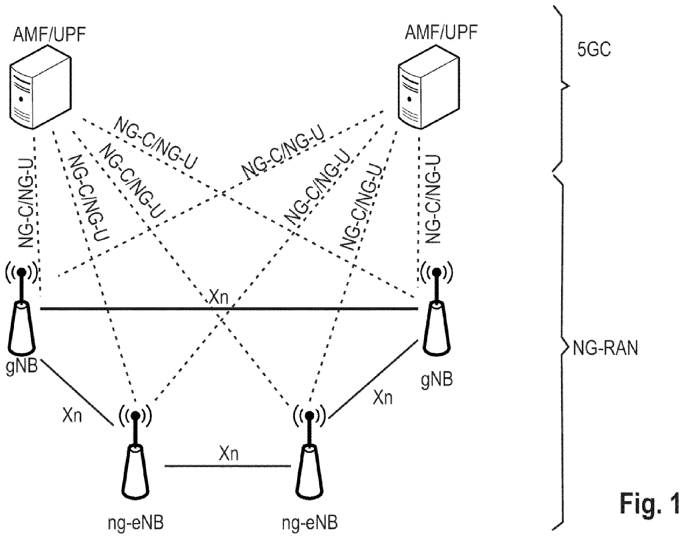

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.0.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

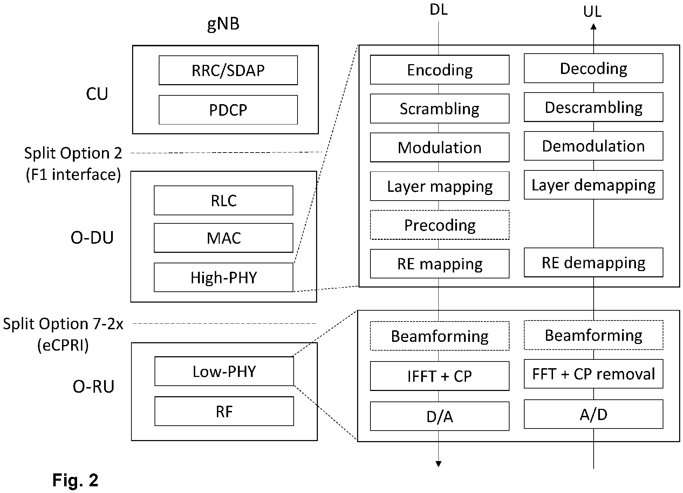

**Fig. 2** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

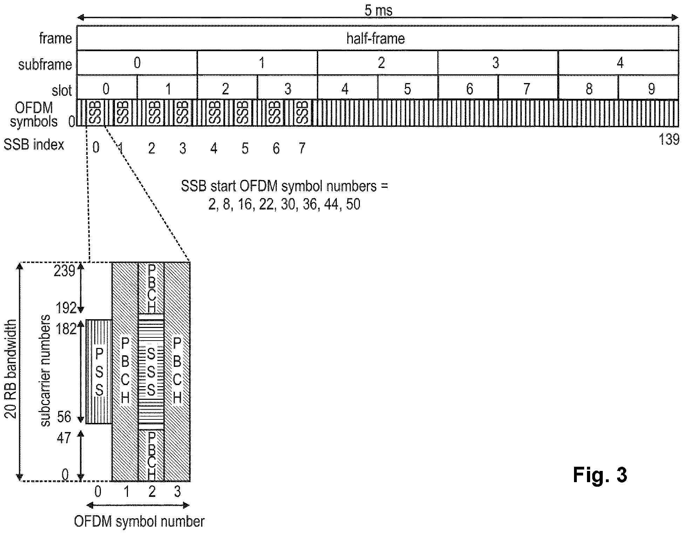

A simplified and exemplary illustration of the SSB according to the above definitions is illustrated in **Fig. 3****,** which shows at the bottom part the PSS, SSS, and PBCH in the time and frequency domain.

The SSB set illustrated in Fig. 3 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

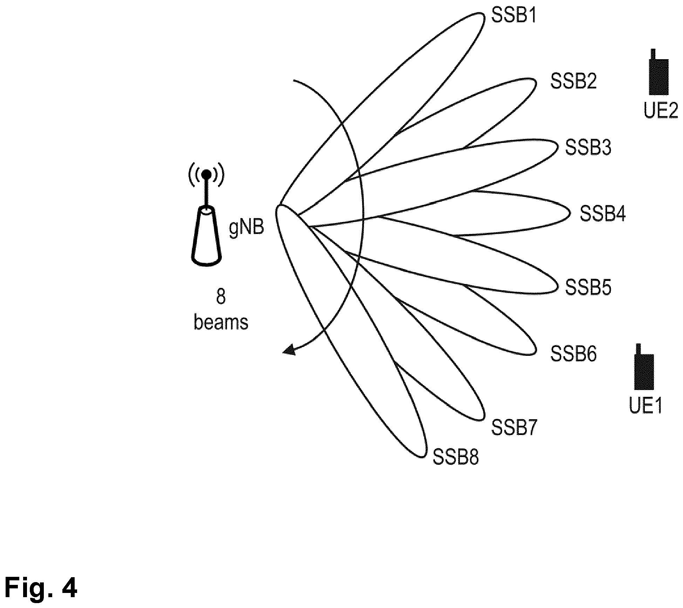

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 4****.** Similar to the exemplary assumption of Fig. 3, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v18.1.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0 e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Uplink Control Information in 5G NR and Scheduling Requests

Whereas Downlink Control Information is carried by the PDCCH, Uplink Control Information (UCI) can be transmitted on the PUCCH or the PUSCH depending on the situation. Uplink control information can be e.g.
- the channel state information (CSI), related to the downlink channel conditions, used to assist downlink scheduling, including multi-antenna and beamforming schemes,
- the ACK/NACK information (Hybrid-ARQ acknowledgments for received DL-SCH transport blocks), and
- scheduling requests, indicating that a device needs uplink resources for UL-SCH transmission.

Not all of these need be carried by a single transmission. For instance, the CSI may be carried alone, or the ACK/NACK may be carried alone, or the SR may be carried alone, or the CSI and ACK/NACK are transmitted together in a PUCCH/PUSCH, etc.

The physical uplink control channel (PUCCH) is the basis for transmission of uplink control. However, NR supports UCI on PUSCH as the basic way of handling simultaneous transmission of data and control. If the device is transmitting on the PUSCH, the UCI is multiplexed with data on the granted resources instead of being transmitted on the PUCCH.

A short duration PUCCH can be transmitted in the last one or two symbols of a slot and thus supports very fast feedback of hybrid-ARQ acknowledgments in order to realize so-called self-contained slots where the delay from the end of the data transmission to the reception of the acknowledgment from the device is in the order of an OFDM symbol, corresponding to a few tens of microseconds depending on the numerology used. This can be compared to almost 3 ms in LTE and is yet another example on how the focus on low latency has impacted the NR design. For situations when the duration of the short PUCCH is too short to provide sufficient coverage, there are also possibilities for longer PUCCH durations.

There are a plurality of different PUCCH formats that can be used for transmitting the UCI, depending on the amount of information and the duration of the PUCCH transmission.

There are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used (see e.g. 3GPP TS 38.211 e.g. v18.1.0, section 6.3.2).

The UCI can be transmitted on the PUCCH flexibly in the time and frequency domain using specifically assigned radio resources, e.g. PUCCH resource sets. A UE can be configured e.g. with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH-Config information element (see e.g. 3GPP TS 38.331 e.g. v18.0.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1. One example configuration according to 3GPP is provided as follows as part of the PUCCH-Config IE (see e.g. 3GPP TS 38.331 v18.0.0)

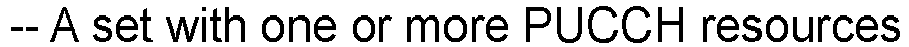

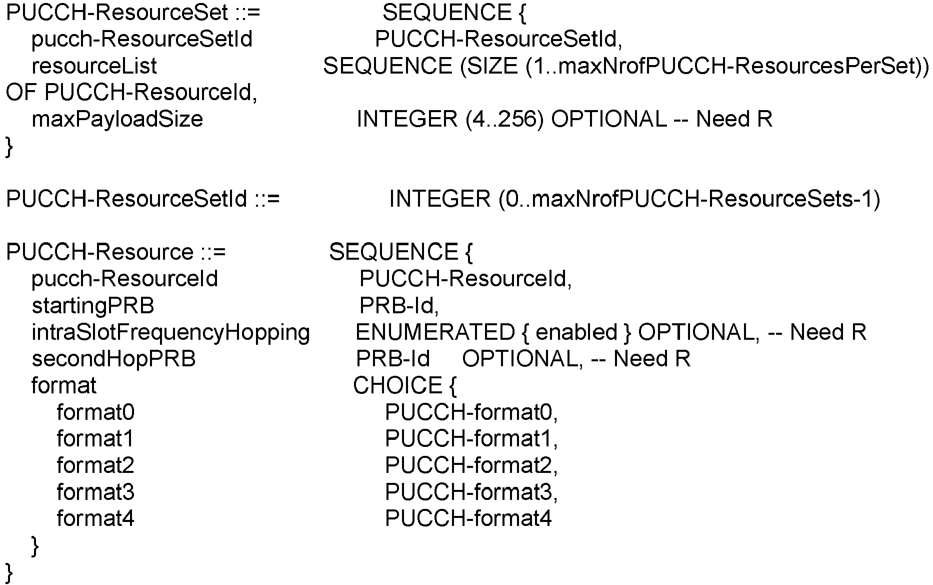

The current reporting of the UCI in the PUCCH is defined in 3GPP TS 38.213 e.g. v18.1.0, section 9.2.

A PUCCH resource may include one or more of the following parameters.
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the *SchedulingRequestConfig* information element (which is configured inside the *MAC-CellGroupConfig* IE) and the *SchedulingRequestResourceConfig* information element (see e.g. 3GPP TS 38.331 v16.7.0, such as section 6.3.2). The *MAC-CellGroupConfig* IE configures the set of scheduling requests, used by the UE (ID, prohibit timer, etc.) and tied by the ID number to the SchedulingRequestResourceConfig which determines the PUCCH resources used alongside the periodicity among other parameters. Finally, in the *LogicalChannelConfig* IE, the logical channel is tied to a scheduling request ID (for details of the above lEs, see 3GPP TS 38.331 v18.0.0).

In brief, the scheduling request is basically a flag (1-bit) used by the user equipment to request uplink resources from the uplink scheduler at the base station. Since the device requesting the resources, by definition, has no PUSCH resource available, the scheduling request is transmitted on the PUCCH using the preconfigured and periodically reoccurring PUCCH resources dedicated to the UE. The serving base station can then assign radio resources to the user equipment.

Each SR configuration consists of a set of periodically reoccurring PUCCH resources across different BWPs and cells (i.e. each SR configuration consists of a set of PUCCH resources tied to a numerology, BWP, and cell). With a dedicated scheduling-request mechanism, there is no need to provide the identity of the device requesting to be scheduled because the identity is implicitly known from the resources upon which the request is transmitted.

Each SR also corresponds to one or more logical channels which means that UE is able to make the query for UL resources for a selected logical channel. For a logical channel at most one PUCCH resource per BWP is configured. This provides the gNB not only with information that there are data awaiting transmission in the device, but also what type of data are awaiting transmission. This is useful information for the gNB given the wider range of traffic types the NR is designed to handle. For example, the gNB may want to schedule a device for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, that is, in the case of multiple logical channels having data to transmit a reasonable behavior is to trigger the scheduling request corresponding to the highest-priority logical channel.

UE may send up to a maximum number of SR requests and the maximum value is configured by network. A scheduling request is repeated in subsequent resources, up to a configurable limit, until a grant is received from the gNB. It is also possible to configure a prohibit timer, controlling how often a scheduling request can be transmitted which prevents UE from sending multiple SRs consecutively. An SR cannot be sent during a measurement gap or when UL-SCH is scheduled.

Finally, when the UE is in RRC_CONNECTED state and UL data arrives, but the UE is not configured with PUCCH resource for scheduling requests, the UE uses the CBRA, contention based random access, procedure based on the SS/PBCH blocks. Moreover, when the UE sends a scheduling request in response to UL data arrival but fails to receive an UL grant from the network, the UE uses the CBRA procedure based on the SS/PBCH blocks. This is because an SR is considered as pending until resources are granted by the gNB and is repeated on the PUCCH as long as it is pending. When the number of SRs sent on the PUCCH reaches a maximum configured by the higher layer, SR failure is declared, and a random access procedure is triggered.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig,* with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 3). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource,* and *SSB-Index.*
2) List of *CSI-ResourceConfig* lEs
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld)*
3) List of CSI-ReportConfig lEs.
   - Different *CSI-ReportConfig* in the list configure different CSI report instances. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfiglD,* being included in the *CSI-ReportConfig* IE, identifies a CSI-*ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index)* and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information),
- PMI (Precoding Matrix Indicator),
- CRI (CSI-RS Resource Indicator),
- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:
- L1-RSRP-related quantities (e.g. cri-RSRP and ssb-Index-RSRP, see later IE CSI-*Report Config)*
- CSI-related quantities (e.g. the rest from the IE *CSI-ReportConfig*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of lEs for defining measurement and report according to the CSI framework is presented in the following:
- *CellGroupConfig* IE
   ∘ the *ServingCellConfig* IE of *SpCellConfig* or of *SCellConfig*
   ▪ *CSI-MeasConfig* IE
      • *CSI-ResourceConfig* IE
         ∘ *NZP-CSI-RS-ResourceSet*
            ▪ *NZP-CSI-RS-Resource*
         ∘ *CSI-SSB-ResourceSet*
            ▪ *SSB-Index*
         ∘ *CSI-IM-ResourceSet*
            ▪ *CSI-IM-Resource*
      • *CSI-ReportConfig* IE

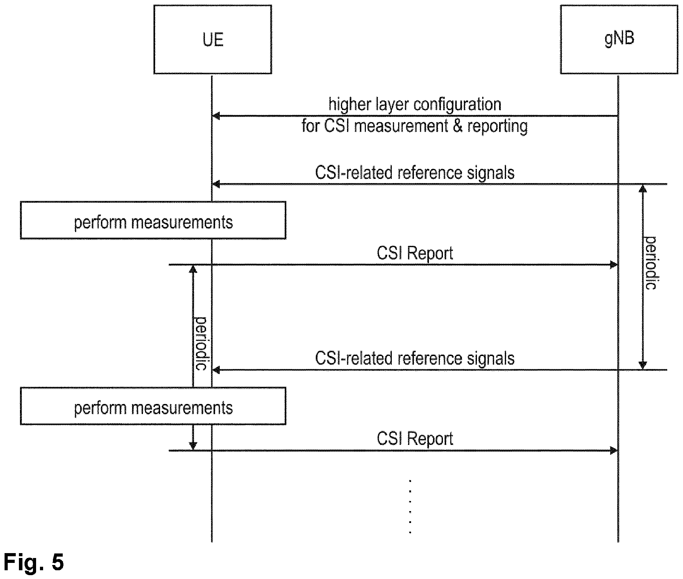

Fig. 5 illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field *"Transmission Configuration Indication".*
- Step 3: One out of the 8 activated TCI states is then actually used by the UE to receive a target channel/signal. For example, the UE receives a DCI signal, which indicates one of the codepoints in the DCI field *"Transmission Configuration Indication".* The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DUUL operation) as follows:

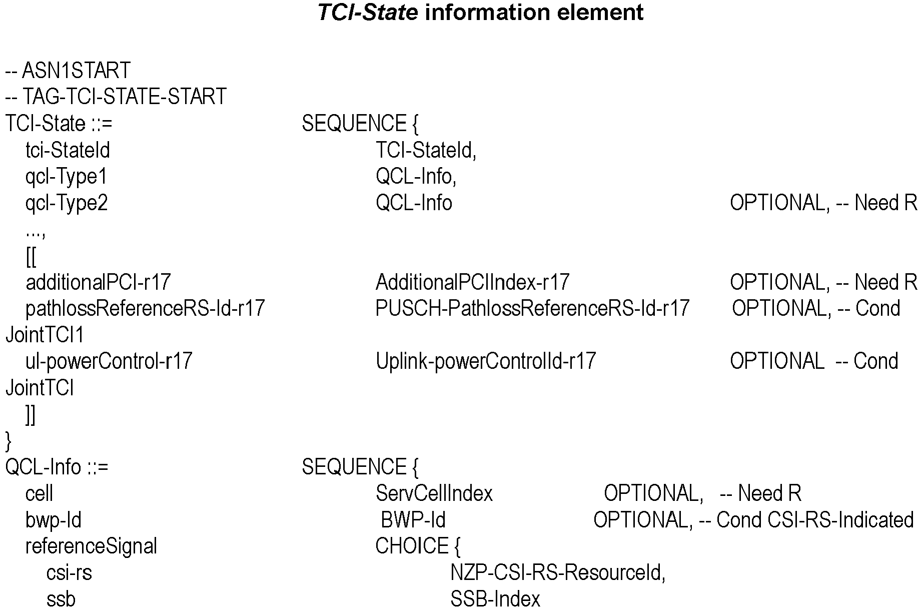

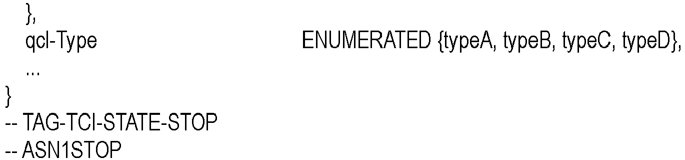

| ***QCL-Info* field descriptions** |
|---|
| ***bwp-Id*** |
| The DL BWP which the RS is located in. If the field is absent, the RS is located in the DL BWP in which the *TCI-State* is applied by the UE. |
| ***cell*** |
| The UE's serving cell in which the *reference Signal* is configured. If the field is absent, the *reference Signal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referencesignal* is set to *csi-rs* and *unifiedTCI-StateType* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *referenceSignal* is configured as SSB for both QCL-Type1 and QCL-Type2. In case the cell is present, the *additionalPCI* refers to a PCI value configured in the list configured using *additionalPC1-ToAddModList* in the serving cell indicated by the field cell. Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |
| ***pathlossReferenceRS-ld*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1, qcl-Type2*** |
| QCL information for the TCI state as specified in TS 38.214 [19] clause 5.1.5. |
| ***tci-Stateld*** |
| ID number of the TCI state. |
| ***ul-PowerControl*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-StateType* is not configured. This field is optionally present, Need R, if *csi-rs* is included and *unifiedTCI-StateType* is configured. Otherwise, it is absent, Need R. |
| *JointTCI* | This field is optionally present, Need R, if this serving cell is configured with *unifiedTCI-StateType* set to *'joint'.* It is absent, Need R, otherwise. |
| *JointTCI1* | This field is mandatory present, if this serving cell is configured with unifiedTCi-StateType set to 'joint'. It is absent, Need R, otherwise. |

For the uplink, the information element *TCI-UL-State* is defined in 3GPP TS 38.331, section 6.3.2.

### 3GPP Release 19 MIMO evolution - UE-initiated /event driven beam management

As presented above, the network may configure periodic or semi-persistent beam reporting or trigger aperiodic beam reporting for the purpose of timely acquiring a best/preferred beam for data / control transmissions. This may result in large uplink reporting overhead and control signaling overhead in addition to reporting latency. Due to the network-configured nature of the beam reporting, the reporting latency caused by the periodic or semi-persistent beam reporting or triggered aperiodic beam reporting may also result in unnecessarily prolonged periods of communication between UE and network using beams that may have degraded unexpectedly. This might even result in beam failures, which then results in that the UE has to perform a beam failure detection and recovery procedure, rather than performing a simple beam switch in a timely manner. This is inefficient, and further, retransmissions of data might be required in addition to the incurred latency of the recovery procedure.

Given that the UE has better and more-timely knowledge of beam quality changes, beam reporting procedures that are initiated by the UE have the potential to lead to more timely beam reports together with reduced reporting overhead and preventing prolonged degraded communication quality.

Consequently, there is a need to specify enhancements to facilitate UE-initiated / event-driven beam management reporting procedures for reducing overhead and/or reporting latency. For such a UE-initiated beam reporting procedure, for the UE to know about the beam-quality change and about when to initiate beam reporting, the UE can perform measurements on DL reference signals. Based on these measurements, the UE can detect whether UE-initiated beam reporting is needed or not. For such a UE-initiated beam reporting procedure, the UE needs to find suitable UL channel resources to transmit the beam management report. This can depend on the report size, the tolerated delay, and the intended reliability of the transmission.

Furthermore, unlike other CSI reporting events and other uplink transmission of uplink control information, the transmission of the UE-initiated beam management report is important for the network because this is triggered at the UE most likely by a deterioration of the UL/DL transmission channels.

For example, on beam report transmission procedure for UE-initiated/event-driven beam reporting, Mode A (dynamically scheduling UCI by NW) was supported, including the following steps:
- Step 1, the UE transmits a first PUCCH to request a resource for a second UL channel to carry beam report.
- Step 2: UE detects a DCI indicating a resource for PUSCH channel carrying beam report.

For example, on beam report transmission procedure for UE-initiated/event-driven beam reporting, Mode B (UCI in pre-configured resource(s) for second UL channel) was also agreed, including the following steps:
- Step 1: UE transmits a first PUCCH (one-bit/multi-bit) notifying a second UL channel to carry beam report.
- Step 2: UE transmits the beam report in the second UL channel.

### Further Improvements

The inventors thus identified the possibility to define an improved UE-initiated CSI reporting. Such an improved UE-initiated CSI reporting facilities an improved beam management reporting procedure to avoid one or more of the above described disadvantages. The present invention relates to different solutions and variants for such an improved UE-initiated CSI reporting.

UE-initiated CSI reporting, which may be used for beam management procedures will play an important role in 6G communication systems, which are expected to operate in the higher frequency ranges (7-24 GHz, FR2 range, Terahertz range).

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression **"reception quality"** or **"downlink signal reception quality"** can be broadly understood as referring to a quality of reception at the UE. It thus reflects the quality of reception at the UE side (i.e. downlink), which is determined by measuring suitable downlink reference signals (such as SSB, CSI-RS, DMRS etc.). The thus measured downlink signal reception quality can e.g. be used as a quality measure for the ability of the UE to receive a downlink channel, such as a downlink control channel or downlink data shared channel (PDCCH, PDSCH), e.g. even in case said downlink channel has not (yet) been received. Alternative expressions are e.g. *"downlink channel quality", "downlink quality", "quality* of a *downlink control channel", "quality* of a *downlink data channel",* and the like.

The expressions **"beam"** and **"downlink reference signal"** can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is **"spatial direction",** where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

The expression **"UE-initiated CSI reporting procedure"** or **"UE-initiated CSI reporting"** and similar expressions can be broadly understood as referring to a procedure that is initiated by the UE. For instance, it may involve that, after initiation, the UE transmits a report to the base station.

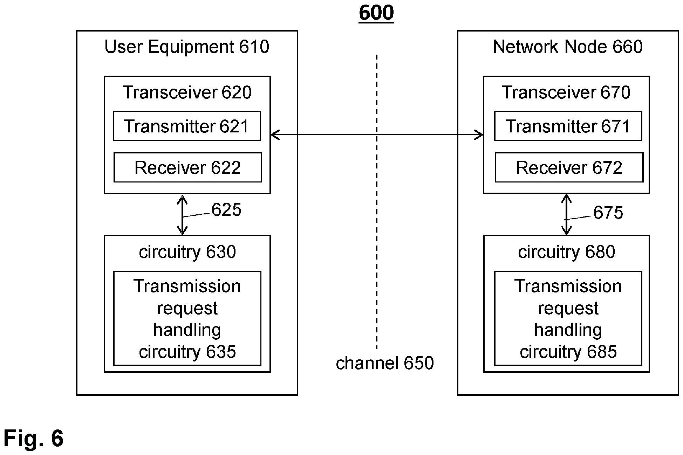

An example of such communication system is illustrated in **Fig. 6****.** The communication system 600 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 6** illustrates a general, simplified and exemplary block diagram of a communication apparatus (which may be exemplarily assumed to be a user equipment (UE) 610 or communication terminal or communication apparatus) and a scheduling device or scheduling node (here exemplarily assumed to be located in a network node 660, e.g. in a LTE eNB (alternatively termed ng-eNB) or the gNB in 5G NR) in the communication system 600. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 610 may also be a sensor device, a wearable device, or a connected vehicle, or a controller of an automated machine in an industrial factory.

As illustrated in **Fig. 6****,** the user equipment 610 and the scheduling device or network node 660 (eNB/gNB) may communicate with each other over a (wireless) physical channel 650 respectively using their transceivers 620 (communication apparatus side) and 670 (base station side). Together, the network node 660 and the user equipment 610 may form the communication system 600. The communication system 600 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 6****,** the user equipment 610 may comprise a transceiver 620 (e.g. including a transmitter 671 and/or a receiver 672) and circuitry (or processing and/or control circuitry) 630, and the network node 660 may comprise a transceiver 670 (e.g. including a transmitter 671 and/or a receiver 672) and (processing and/or control) circuitry 680.

The term *"**transceiver**"* refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the exemplary user equipment 610, the circuitry 630 may control the transceiver 620, which may include the transmitter 621 and the receiver 622, to receive and/or transmit data. This is illustrated by an arrow 625 which represents schematically an interface between the circuitry 630 and the transceiver 620, over which the control is performed.

In the exemplary network node 660, the circuitry 680 may control the transceiver 670 to receive and/or transmit data. This is illustrated by an arrow 675, which represents schematically an interface between the circuitry 680 and the transceiver 670, over which the control is performed. For example, the circuitry 680 may instruct 675 the transceiver 670 to transmit the first physical layer signal.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 610 and a network node 660, without implying any limitation to networks such as 3GPPP NR networks.

As shown in **Fig. 6** (left-hand side), provided is a user equipment (UE) 610. The UE 610 comprises a transceiver 620 and circuitry 630. The transceiver 620, in operation, transmits a transmission request for reporting an UE-initiated channel state information, CSI, report to a network node.

In other words, after a UE-initiated CSI report is triggered, the UE may transmit a transmission request for reporting said UE-initiated CSI report. Such a transmission request may be transmitted using preconfigured resources on a PUCCH. A UE-initiated CSI report, such as a beam management report, may be triggered by the occurrence of certain events. For beam management, the occurrence of some events may trigger a beam management report. For example, if the signal strength of a new beam is better than that of the current beam by a certain threshold, or if the signal strength of the current beam falls below a threshold, then an event may be triggered.

For example, such a transmission request may include a request for uplink resources. In particular, the UE may request a scheduling of uplink resources for transmitting an UE-initiated CSI report to the network node.

For example, such a transmission request may include a notification to the network node regarding a second UL channel to carry CSI report (e.g. UCI in preconfigured resources on a PUCCH). In other words, the UE may decide on a preconfigured UL resource to transmit the UE-initiated CSI report to the network node and informs the network node regarding the decision on the UL resource in the transmission request.

In an exemplary implementation, this notification may be one bit. The UE may send this one bit on PUCCH resources that are configured for this purpose. When the network node receives said bit on those specific resources, the network node knows that the UE initiated a report and the UE will send the report also on other preconfigured resources.. However, the present disclosure is not limited to the exemplar one bit notification.

For example, when the UE is preconfigured with UL resources, it may transmit a transmission notification to the network node. Otherwise the UE may transmit a scheduling request for an UL grant. The expression **transmission request** may correspond to such a transmission notification or such a scheduling request. For example, for an UE in Mode A, the transmission request corresponds to a scheduling request. For example, for an UE in Mode B, the transmission request corresponds to a transmission notification. Mode A and Mode B are explained in detail in section *3GPP Release 19 MIMO evolution* - *UE-initiated* / *event driven beam management.*

The circuitry 630, in operation, determines, in a first determination, whether the transmission request is successful or not.

For example, the UE may receive, from the network node, an indication that the transmission request has been successful. For example, if the UE may not receive, from the network node, an indication that the transmission request has been successful, the UE may consider the transmission request as unsuccessful.

For example, the UE may receive a CSI request from the network node. The UE may interpret such a CSI request from the network node as a successful transmission request or as an unsuccessful transmission request, based on the information requested by the network node in the CSI request. For example, in case the network node requests information that includes the information of the UE-initiated CSI report, the UE may determine that the transmission request was successful.

Moreover, the circuitry 630, in operation, determines, in a second determination, based on the first determination, whether to retransmit the transmission request.

For example, in case the transmission request for reporting is successful, the circuitry, in operation, may determine to omit a retransmission of the transmission request for reporting.

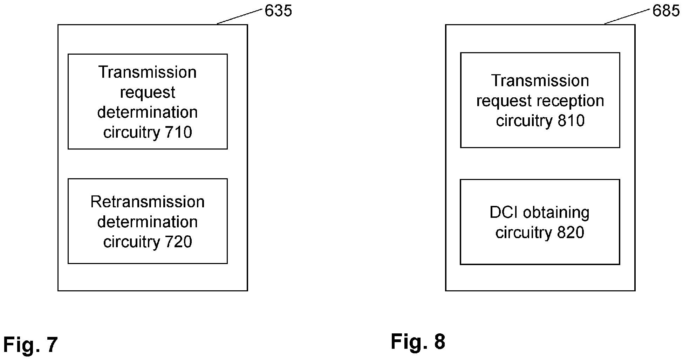

**Fig. 7** shows an exemplary functional structure of the circuitry 630, in particular, the transmission request handling circuitry 635. As shown, the transmission request handling circuitry 635 may include a transmission request determination circuitry 710. For example, the transmission request handling circuitry 635 may include a retransmission determination circuitry 720. More specifically, circuitry 710 may determine whether the transmission request is successful or not. The retransmission determination circuitry 720 may determine whether to retransmit the transmission request.

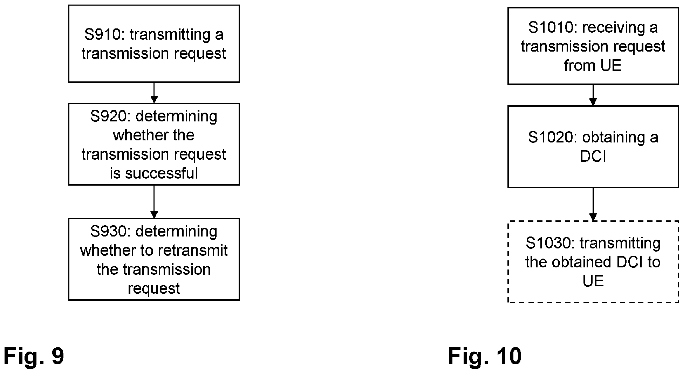

In correspondence with the above-described UE, a method for handling a transmission request for reporting an UE-initiated CSI report, by a user equipment is provided. As shown in **Fig. 9****,** the method comprises the steps of:
- transmitting S910 a transmission request for reporting an UE-initiated channel state information, CSI, report to a network node;
- determining S920 in a first determination, whether the transmission request is successful or not; and
- determining S930, in a second determination, based on the first determination, whether to retransmit the transmission request.

As further shown in Fig. 6 (right-hand side), also provided is a network node 660. The network node 660 comprises a transceiver 670 and circuitry 680. The transceiver 670, in operation, receives, from a user equipment, UE, a transmission request for reporting an UE-initiated channel state information, CSI. The circuitry 680, in operation, obtains a DCI for transmission to the UE, wherein the DCI is based on a configuration for UE-initiated CSI reporting and/or the transmission request.

Moreover, the transceiver, in operation, may further transmit the obtained DCI to the UE.

For example, the DCI may indicate an uplink resource for the UE to transmit the UE-initiated CSI report. In other words, based on the transmission request, the network node may obtain a DCI for scheduling UL resources. In other words, the network node may generate the DCI for scheduling UL resources. Such a scheduling DCI may additionally be based on a configuration for UE-initiated CSI reporting.

In general, a configuration for UE-initiated CSI reporting may provide configurations and/or procedures for the behavior of the network node when it receives a transmission request. A configuration for UE-initiated CSI reporting may be given by a standard, by a configuration received from the core network, or the like.

Such a configuration for UE-initiated CSI reporting may, for example, include that the CSI request of the DCI follows the reporting configuration of the UE-initiated report. Such a configuration for UE-initiated CSI reporting may, for example, include resources to be monitored if a transmission notification is received as transmission request (e.g. in Mode B). Such a configuration for UE-initiated CSI reporting may, for example,include resources that may be scheduled if a scheduling request is received as transmission request (e.g. in Mode A). Such a configuration for UE-initiated CSI reporting may, for example,determine how a DCI may indicate a successful transmission request.

For example, the DCI may indicate a resource for PUSCH channel carrying CSI report.

**Fig.** 8 shows an exemplary functional structure of the circuitry 680, in particular, the transmission request handling circuitry 685. In particular, the transmission request handling circuitry 685 may include transmission request reception circuitry 810. For example, the transmission request handling circuitry 685 may include an additional DCI obtaining circuitry 820. Circuitry 810 may be responsible for receiving, from a user equipment, UE, a transmission request for reporting an UE-initiated channel state information, CSI. Furthermore, circuitry 820 may be responsible for obtaining a DCI for transmission to the UE, wherein the DCI is based on a configuration for UE-initiated CSI reporting and/or the transmission request.

It is, however, noted that the UE circuitries 630, 635, 710 and 720 as well as gNB circuitries 680, 685 and 820 may implement more functionality than the above-mentioned, and the functionalities mentioned above are in general implemented by circuitries 630 and 680 without being limited to the respective circuitries 635, 810 and 820 or 685 and 820 described above.

Furthermore, in correspondence with the above-described network node 660, a method to be performed by a network node 660 for handling a transmission request for reporting an UE-initiated CSI report is provided. As shown in **Fig. 10****,** the method comprises the step of:
- receiving S1010, from a user equipment, UE, a transmission request for reporting an UE-initiated channel state information, CSI;
- obtaining S1020, a DCI for transmission to the UE, wherein the DCI is based on a configuration for UE-initiated CSI reporting and/or the transmission request.

Moreover, the method may include an addition step of transmitting S1030 the obtained DCI to the UE. Furthermore, the network node may obtain and/or transmit any higher layer configuration for UE-initiated CSI reporting as mentioned in the present disclosure.

In the further description, the details and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 630 and/or the circuitry 680).

In general, the UE reliably transmits a scheduling request or notification for using uplink resources for the purpose of transmitting a UE-initiated channel state information report. The UE determines whether the uplink resource request or notification to the network node succeeded or failed. The UE decides whether to retransmit the scheduling request or notification after a UE-initiated channel state information report.

Increasing the reliability of the scheduling request or notification may allow the UE to report important channel state variations and therefore increase network data throughput and reduce data transmission latency. The reliability of the scheduling request or notification may be increased by using a low overhead mechanism.

For example, the UE may receive a DCI from the network node. In particular, the transceiver, in operation, receives a DCI from the network node. The DCI may be any of the exemplary DCI obtained by the network node as explained above. However, the DCI may be a DCI message that is independent of the transmission request. For example, the network node may transmit a scheduling DCI for a network initiated CSI report. For example, the network node may transmit any kind of scheduling DCI, e.g. for scheduling any type of UL data.

For example, the DCI may indicate that the network node has received the transmission request. In case the transmission request included an indication for a second UL channel to carry the CSI report, the network node may not indicate in the DCI an uplink resource for the UE. Such a DCI may be based on a configuration for UE-initiated CSI reporting. Such a configuration for UE-initiated CSI reporting is explained in detail above.

The UE, in particular, the circuitry, may determine if the received DCI matches the transmission request. The first determination, i.e. the determining whether the transmission request is successful or not, may be based on the determining if the received DCI matches the transmission request.

In other words, in case the received DCI matches the transmission request, the transmission request may be considered as successful. In case the received DCI does not match the transmission request, the transmission request may be considered as unsuccessful.

For example, the UE, in particular, the circuitry, may start a first timer upon transmitting the transmission request. The UE may use a configured timer DCI_rx_timer as the first timer.

In other words, upon transmitting the transmission request for the purpose of transmitting a UE-initiated channel state information report, the UE starts the timer DCI_rx_timer. The starting time of the timer may be immediately after the transmission request, or at the end of the slot or subframe, in which the transmission request is sent.

If the first timer expires without the UE receiving a DCI, the circuitry, in operation, may determine that the transmission request for reporting is unsuccessful. In other words, if the UE does not receive a DCI before the timer expires, the UE recognizes (determines) that the transmitted transmission request was failure. Such a timer may take into account transmission and processing time of the request as well as the DCI response to prevent false decisions about failed requests.

The first timer expires if the timer reaches or exceeds a corresponding preconfigured time period. Such a preconfigured time period may be configured by a standard, a higher-layer configuration, or the like.

If the UE receives a DCI before the timer expires, the UE may check whether the received control information (e.g. a scheduling grant, or the like) matches the UE's transmission request. If it is a match, the UE determines that the request succeeded and that the scheduling received DCI matches the request. Otherwise (i.e. if the scheduling received DCI does not match the request) the UE may determine that the transmission request was a failure (an unsuccessful transmission request). Even if a scheduling grant is received but not matching request, the UE may still declare a transmission request failure (i.e. an unsuccessful transmission request).

In other words, the transceiver, in operation, may further receive a DCI from the network node before the first timer expires. The circuity, in operation, may determine that the transmission request for reporting is successful, if the received DCI matches the transmission request. The circuity, in operation, may determine that the transmission request for reporting is unsuccessful, if the received DCI does not match the transmission request.

The received DCI may be, for example, an UL scheduling DCI (e.g. Format 0_1), a DL scheduling DCI (e.g. format 1_1) or a UE Group Common DCI (e.g. Format 2_2/2_3). However, the present disclosure is not limited to any of these exemplary DCIs.

Such a matching may be performed, for example, based on a value of a field in the DCI or based on a CSI request included in the DCI.

In a first example for determining a match between received DCI and the UE's transmission request, the UE, in particular the circuity, in operation, may determine that the received DCI matches the transmission request if the received DCI includes an indication for being a response to the transmission request.

The UE may check whether the received DCI includes field to identify (indication) that it is a response to the UE's transmission request and hence matches the UE's scheduling request (request success). The identifier may be a one bit identifier or a multi-bit identifier. The field may be a new field in a DCI or may reuse an existing field in a DCI.

In case there is one type of UE-initiated report, this identifier may be one bit where value 1 means the network node expects the UE to transmit a UE-initiated channel state information report on the scheduled resources.

In case of 2*ⁿ* types of UE-initiated channel state information reports, the identifier may be n-bits. Such a clear indication using the flags of any successful reception of transmission request facilitates multiple events being distinguished.

In a second example for determining a match between received DCI and the UE's transmission request, the UE, in particular the circuity, in operation, may determine that the received DCI matches the transmission request if the received DCI includes a CSI request for information that includes the information included in the UE-initiated CSI report.

In other words, the information included in the UE-initiated CSI report may be, for example, a part of the information as the requested information. The information included in the UE-initiated CSI report may be, for example, the same information as the requested information.

If the information included in the UE-initiated CSI report is a part of or the same as the information to be included in the CSI information requested by the network node, the UE may determine that the transmission request is successful.

Otherwise, if either there is no CSI information request included the scheduling DCI, or the CSI information requested by the network node does not include the information included in the UE-initiated channel state information report, the UE may determine that the transmission request is a failure (unsuccessful). Even if the UE receives a CSI request from the network node, the UE may still choose to retransmit the transmission request if the CSI request does not match the UE-initiated CSI reporting.

The type of CSI information requested in the DCI may be, for example, stated explicitly. Alternatively, the type of CSI information requested in the DCI may be, for example, determined through a configuration ID, where the UE may be configured with multiple CSI measurement configurations.

As mentioned above, the UE decides whether to retransmit the scheduling request or notification. Such a decision (determination) whether to retransmit is denoted as second determination in the present disclosure. Retransmission of the transmission request, in case of an unsuccessful transmission request, may ensure UL resources for reporting the UE-initiated CSI report.

For example, in case the transmission request for reporting is successful, the UE, in particular the circuitry, in operation, may determine to omit a retransmission of the transmission request for reporting. The determination to omit a retransmission is included in the second determination (whether to retransmit the transmission request).

The UE, in particular the transceiver, in operation, may transmit the UE-initiated CSI report in case the transmission request for reporting is successful. The UE may use the UL resources scheduled in the DCI (e.g. for Mode A). The UE may use preconfigured resources. The use of said preconfigured resources is notified to the network node by the transmission request (transmission notification), e.g. for Mode B. In Mode B, the resources for transmitting the report are pre-configured by higher layer and the UE just notifies the network node in the transmission request that it is going to use these resources.

For example, the UE is configured beforehand with resources to transmit on. But since the events are triggered infrequently, the UE may use those resources infrequently. The notification tells the network node that the UE will use the configured resources. For example, the notification includes one bit for indication that the preconfigured resources will be used by the UE. A multi-bit indication may be used to tell the network node which event triggered the report in case many events are configured.

For example, if the UE is configured with a plurality of resources for UE-initiated CSI reporting, the notification may include an indication which resources will be used by the UE. In such an exemplary case a multi-bit indication, indicating which resources to use, may be included in the notification.

Also in mode B, the UE may transmit the actual report before or after it determines the transmission request was success or failure. In a first example for mode B, the UE may await a confirmation from the network node before the UE transmits the UE-initiated CSI report. In a second example for mode B, the UE may transmit the UE-initiated CSI report using the resources indicated in the transmission notification before receiving a confirmation from the network node. In the second example for Mode B, a retransmission may include a retransmission of the transmission request (transmission notification) and a retransmission of the actual report. Mode A and Mode B are explained in detail in section *3GPP Release 19 MIMO evolution* - *UE-initiated* / *event driven beam management.*

For example, in case the transmission request for reporting is unsuccessful, the UE, in particular the circuitry, in operation, may determine, in the second determination, to omit a retransmission of the transmission request for reporting, if at least one condition out of a set of one or more conditions is fulfilled.

In case the set of the one or more conditions includes two or more conditions, the UE may omit a retransmission of the transmission, request if at least one of the two or more conditions is fulfilled. In other words, the first condition that is fulfilled causes the omission of the retransmission.

The UE, in particular the circuitry, in operation, may determine, in the second determination, to retransmit the transmission request for reporting, if the none of the conditions in the set are fulfilled.

In other words, the UE may decide (in the second determination) not to retransmit the transmission request based on pre-specified conditions. Otherwise (if the specified conditions are not satisfied), it retransmits the transmission request.

In a first exemplary implementation, the set of one or more conditions may include a condition that is fulfilled, if the UE receives a scheduling DCI including a CSI request, before the first timer expires. The UE may further transmit the requested CSI report using the resources scheduled in the DCI.

In other words, the UE may determine not to retransmit the transmission request in case the UE receives a scheduling DCI including a CSI request that does not match the UE request, before the timer DCI_rx_timer expires. The UE then may transmits the CSI report requested by the network node and ignores the UE initiated CSI report.

The first exemplary implementation may facilitate a lower latency. A network-initiated CSI report may facilitate a tracking of the channel variations by the network. Therefore, in some cases transmitting the UE-initiated report may be considered as less critical.

In a second exemplary implementation, the set of one or more conditions may include a condition that is fulfilled, if the UE receives a scheduling DCI before the first timer expires. The UE may further transmit the UE-initiated CSI report using the resources scheduled in the DCI.

In other words, the UE may determine not to retransmit the transmission request in case the UE receives a scheduling DCI that does not match the UE request, before the timer DCI_rx_timer expires. Then the UE may decide that the UE-initiated channel state information report has high priority and uses the scheduled resources by the received scheduling DCI to transmit the UE-initiated channel state information report. The second exemplary implementation may facilitate a lower latency. The second exemplary implementation may cause a payload mismatch for the network node and/or a blind decoding for the network node.

In a third exemplary implementation, the UE may start a second timer upon transmitting the transmission request. Moreover, the set of one or more conditions may include a condition that is fulfilled, if the second timer is expired.

The second timer expires if the timer reaches or exceeds a corresponding preconfigured time period. Such a preconfigured time period may be configured by a standard, a higher-layer configuration, or the like.

In other words, the UE may be configured with a maximum retransmission timer (second timer). The UE may determine not to retransmit the transmission request in case the UE declares request failure, but a configured maximum retransmission timer has expired. This may happen, for example, when the UE-initiated channel state information report contents may be no longer relevant. The maximum retransmission timer (second timer) may be started at the time the first transmission request was sent. For example, the maximum retransmission timer may be configured semi-statically by higher layers.

In a fourth exemplary implementation, the UE may count a number of retransmissions of the transmission request. Moreover, the set of one or more conditions may include a condition that is fulfilled, if the number of retransmissions is greater than a preconfigured threshold.

In other words, the UE may be configured with a maximum retransmission counter. Such a preconfigured threshold (maximum retransmission counter) may be configured by a standard, a higher-layer configuration, or the like.

The UE may determine not to retransmit the transmission request in case the UE declares request failure, but a retransmission counter has reached its limit (i.e. maximum retransmission counter corresponding to the preconfigured threshold). This may happen, for example, if the UE retransmitted the transmission request several times without success. The retransmission counter may be incremented at the time the scheduling request is transmitted by the UE. For example, the maximum retransmission counter (preconfigured threshold) may be configured semi-statically by higher layers.

In a fifth exemplary implementation, the UE may determine to omit a retransmission of the transmission request in the case of a combination of the third and the fourth exemplary implementations, where the UE is configured with both a maximum retransmission timer and maximum retransmission counter. In other words, if one of the maximum retransmission timer or the maximum retransmission counter is reached or exceeded, the UE may determine to omit a retransmission.

In a sixth exemplary implementation, the UE may determine to omit a retransmission of the transmission request in case the configured maximum retransmission timer according to the third exemplary implementation is not yet expired, but the condition according to the first exemplary implementation is met. In other words, if the second timer is not yet expired, but the UE receives a scheduling DCI including a CSI request, before the first timer expires, the UE may determine to omit a retransmission. The UE may further transmit the requested CSI report using the resources scheduled in the DCI.

In a seventh exemplary implementation, the UE may determine to omit a retransmission of the transmission request in case the configured maximum retransmission timer to the third exemplary implementation is not yet expired, but the condition according to the second exemplary implementation is met. In other words, if the second timer is not yet expired, but the UE receives a scheduling DCI before the first timer expires, the UE may determine to omit a retransmission. The UE may further transmit the UE-initiated CSI report using the resources scheduled in the DCI.

In an eighth exemplary implementation, the UE may determine to omit a retransmission of the transmission request in case the retransmission counter according to the fourth exemplary implementation has not yet reached the configured maximum retransmission counter, but the condition according to the first exemplary implementation is met. In other words, if the retransmission counter has not yet reached or exceeded the preconfigured threshold, but the UE receives a scheduling DCI including a CSI request, before the first timer expires, the UE may determine to omit a retransmission. The UE may further transmit the requested CSI report using the resources scheduled in the DCI.

In a ninth exemplary implementation, the UE may determine to omit a retransmission of the transmission request in case the retransmission counter according to the fourth exemplary implementation has not yet reached the configured maximum retransmission counter, but the condition according to the second exemplary implementation is met. In other words, if the retransmission counter has not yet reached or exceeded the preconfigured threshold, but the UE receives a scheduling DCI before the first timer expires, the UE may determine to omit a retransmission. The UE may further transmit the UE-initiated CSI report using the resources scheduled in the DCI.

In any of the fifth to the ninth exemplary implementation, the set of the one or more conditions includes two conditions. The UE may omit a retransmission of the transmission request if at least one of the two conditions is fulfilled. In other words, the first condition out of the set of conditions that is fulfilled causes the omission of the retransmission.

In a tenth exemplary implementation, the UE may determine to omit a retransmission of the transmission request in case neither the configured maximum retransmission timer to the third exemplary implementation is expired nor the retransmission counter according to the fourth exemplary implementation has reached the configured maximum retransmission counter, but the condition according to the first exemplary implementation is met. In other words, if neither the second timer is expired nor the retransmission counter has reached or exceeded the preconfigured threshold, but the UE receives a scheduling DCI including a CSI request, before the first timer expires, the UE may determine to omit a retransmission. The UE may further transmit the requested CSI report using the resources scheduled in the DCI.

In an eleventh exemplary implementation, the UE may determine to omit a retransmission of the transmission request in case neither the configured maximum retransmission timer to the third exemplary implementation is expired nor the retransmission counter according to the fourth exemplary implementation has reached the configured maximum retransmission counter, but the condition according to the second exemplary implementation is met. In other words, if neither the second timer is expired nor the retransmission counter has reached or exceeded the preconfigured threshold, but the UE receives a scheduling DCI before the first timer expires, the UE may determine to omit a retransmission. The UE may further transmit the UE-initiated CSI report using the resources scheduled in the DCI.

In any of the tenth or eleventh exemplary implementation, the set of the one or more conditions includes three conditions. The UE may omit a retransmission of the transmission request if at least one of the three conditions is fulfilled. In other words, the first condition out of the set of conditions that is fulfilled causes the omission of the retransmission.

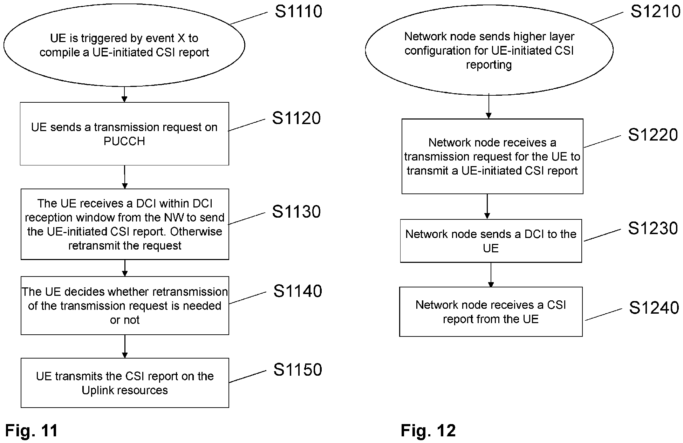

**Fig. 11** provides a flowchart for an exemplary implementation of an UE. The UE according to Fig. 11 is triggered S1110 by an event X to compile a UE-initiated CSI report for transmitting said report to the network node (NW). UE further sends S1120 a transmission request on PUCCH. The UE receives S1130 a DCI within DCI reception window from the NW to send the UE-initiated CSI report. Otherwise the UE may retransmit the request. The UE decides S1140 whether retransmission of the transmission request is needed or not. Such a decision may be based on any of the conditions as explained in detail above for the first to eleventh exemplary implementations. UE transmits S1150 the CSI report on the UL resources. The UL resources may be indicated by the received DCI or may be notified by the UE in the transmission request as explained above.

**Fig. 12** provides a flowchart for an exemplary implementation of a network node. The network node sends S1220 higher layer configuration for UE-initiated CSI reporting. The network node receives S1220 a transmission request for the UE to transmit a UE-initiated CSI report. The transmission request may be any of the types of transmission requests as explained in detail above. The network node sends S1230 a DCI to the UE. The transmitted DCI may be any of the types of DCls as explained in detail above. The network node receives S1240 a CSI report from the UE.

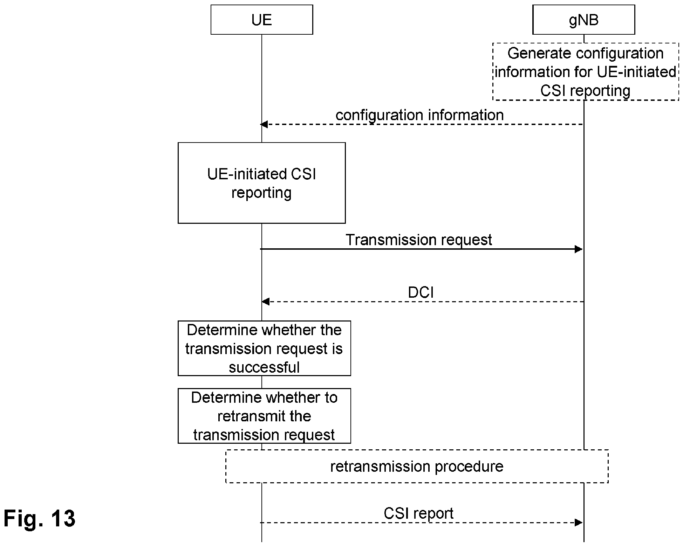

**Fig. 13** is a signaling diagram of an exemplary and simplified implementation of the handling of an UE-initiated CSI reporting, illustrating the exchange of messages between the different participating entities (here the UE and gNB) and the steps performed at these entities. The UE behavior and gNB behavior follow the above described UE and network node and the respective methods.

It is assumed that the UE is located in its current serving cell, controlled by the gNB (as an example of a base station), which is also responsible for the beam management for the UE. The UE and gNB may or may not already communicate with each other, e.g. via PDCCH, PDSCH etc.

For example, the UE may assist beam management at the gNB by providing information on possible different and better beams that can be used by the gNB in the downlink transmission towards the UE and/or better beams that the UE could use in the uplink transmission (e.g. instead of a currently-used beams). Correspondingly, the UE-initiated beam management report is generated by the UE to carry suitable information. Then, the UE may initiate transmitting the generated UE-initiated beam management report to the network node.

One optional process is that the gNB generates configuration information for UE-initiated CSI reporting and transmits said generated configuration information to the UE (see dashed box and arrow in Fig. 13). These configuration information may include any of the higher layer configurations as mentioned above. The UE transmits a transmission request to the gNB. Moreover, the UE determines (first determination) whether the transmission request is successful. The UE also determines (second determination) whether to retransmit the transmission request. The UE may receive a DCI from the gNB. The DCI may , for example, include a confirmation for transmitting the UE-initiated CSI report. The DCI may, for example, include scheduling information for transmitting the UE-initiated CSI report. The DCI may, for example, include a request for a CSI report. The DCI may, for example, include any kind of scheduling information for UL resources. The UE may perform the first and or the second determination based on the received DCI as explained above. Based on the first determination, the UE decides in the second determination whether to retransmit the transmission request. The retransmission of the transmission request is indicated as retransmission procedure in a dashed box in Fig. 13. The UE may further transmit, in an optional step, a CSI report to the UE. As explained above, the transmitted CSI report may be the UE-initiated CSI report, or the transmitted CSI report may be a CSI report as requested by the network node in the DCI. For example, no CSI report may be transmitted in case the transmission request or each of a plurality of retransmitted transmission requests is unsuccessful. The exemplary and simplified implementation according to Fig. 13 may be applicable to both Mode A and Mode B.

However, the present disclosure is not limited to the exemplary behavior as shown in Fig. 13. For example, in Mode B, the UE may transmit the CSI report before receiving a DCI from the gNB and determining whether the transmission request is successful. In such an example, the retransmission procedure may also include a retransmission of the UE-initiated CSI report. H

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### NR Random Access

Random access is a procedure that is performed when a UE establishes a connection with the network, e.g. an initial connection or a connection after a period of inactivity. A logical channel for RACH is called RACH (random access channel), and the corresponding physical random access channel is abbreviated as PRACH. There are different RACH procedures depending on the use case.

RACH in NR includes the concept of RACH occasions, where a plurality of preambles (e.g. 64 preambles) are reused by different frequency and time resources called "RACH occasions" (RO). By a configured mapping between SSBs and ROs, a gNB can determine the SSB to which a UE is associated or linked to. For instance, when beam sweeping is performed, different SSBs are transmitted in different directions and at different timings.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (User Equipment)

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band. (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

Aspect 1: A user equipment, UE, comprising: a transceiver, which in operation: transmits a transmission request for reporting an UE-initiated channel state information, CSI, report to a network node; and circuitry, which in operation: determines, in a first determination, whether the transmission request is successful or not, determines, in a second determination, based on the first determination, whether to retransmit the transmission request.

Aspect 2: The UE according to aspect 1, wherein the transceiver, in operation, further receives a DCI from the network node; and the circuitry, in operation, further determines if the received DCI matches the transmission request, and wherein the first determination is based on the determining if the received DCI matches the transmission request.

Aspect 3: The UE according to any of the aspects 1 or 2, wherein the circuitry, in operation, starts a first timer upon transmitting the transmission request, and if the first timer expires without the transceiver, in operation, receiving a DCI, the circuitry, in operation, determines that the transmission request for reporting is unsuccessful.

Aspect 4: The UE according to aspect 3, wherein the transceiver, in operation, further receives a DCI from the network node before the first timer expires, he circuity, in operation, determines that the transmission request for reporting is successful, if the received DCI matches the transmission request; and determines that the transmission request for reporting is unsuccessful, if the received DCI does not match the transmission request.

Aspect 5: The UE according to any of the aspects 2 to 4, wherein the circuity, in operation, determines that the received DCI matches the transmission request if the received DCI includes an indication for being a response to the transmission request.

Aspect 6: The UE according to any of the aspects 2 to 4, wherein the circuity, in operation, determines that the received DCI matches the transmission request if the received DCI includes a CSI request for information that includes the information included in the UE-initiated CSI report.

Aspect 7: The UE according to any of the aspects 1 to 6, wherein, in case the transmission request for reporting is successful, the circuitry, in operation, determines, in the second determination, to omit a retransmission of the transmission request for reporting.

Aspect 8: The UE according to any of the aspects 1 to 6, wherein, in case the transmission request for reporting is unsuccessful, the circuitry, in operation, determines, in the second determination, to omit a retransmission of the transmission request for reporting, if at least one condition out of a set of one or more conditions is fulfilled.

Aspect 9: The UE according to aspect 8, wherein the set of one or more conditions includes a condition that is fulfilled, if the transceiver, in operation, receives a scheduling DCI including a CSI request, before the first timer expires; and the transceiver, in operation, transmits the requested CSI report using the resources scheduled in the DCI.

Aspect 10: The UE according to aspect 8, wherein the set of one or more conditions includes a condition that is fulfilled, if the transceiver, in operation, receives a scheduling DCI before the first timer expires; and the transceiver, in operation, transmits the UE-initiated CSI report using the resources scheduled in the DCI.

Aspect 11: The UE according to any of the aspects 8 to 10, wherein the circuitry, in operation, starts a second timer upon transmitting the transmission request; and the set of one or more conditions includes a condition that is fulfilled, if the second timer is expired.

Aspect 12: The UE according to any of the aspects 8 to 11, wherein the circuitry, in operation, counts a number of retransmissions of the transmission request, the set of one or more conditions includes a condition that is fulfilled, if the number of retransmissions is greater than a preconfigured threshold.

Aspect 13: A network node comprising: a transceiver, which in operation: receives, from a user equipment, UE, a transmission request for reporting an UE-initiated channel state information, CSI; and circuitry, which in operation: obtains a DCI for transmission to the UE, wherein the DCI is based on a configuration for UE-initiated CSI reporting and/or the transmission request.

Aspect 14: A method for a user equipment, UE, for handling a transmission request for reporting an UE-initiated CSI report, the method comprising: transmitting a transmission request for reporting an UE-initiated channel state information, CSI, report to a network node; determining in a first determination, whether the transmission request is successful or not; and determining, in a second determination, based on the first determination, whether to retransmit the transmission request.

Aspect 15: A method for a network node for handling a transmission request for reporting an UE-initiated CSI report, the method comprising: receiving, from a user equipment, UE, a transmission request for reporting an UE-initiated channel state information, CSI; obtaining, a DCI for transmission to the UE, wherein the DCI is based on a configuration for UE-initiated CSI reporting and/or the transmission request.

Aspect 16: An integrated circuit, which in operation, controls a process of a user equipment, UE, the process comprising the following steps performed by the UE: transmitting a transmission request for reporting an UE-initiated channel state information, CSI, report to a network node; determining in a first determination, whether the transmission request is successful or not; and determining, in a second determination, based on the first determination, whether to retransmit the transmission request.

Aspect 17: An integrated circuit, which in operation, controls a process of a network node, the process comprising the following steps performed by the network node: receiving, from a user equipment, UE, a transmission request for reporting an UE-initiated channel state information, CSI; obtaining, a DCI for transmission to the UE, wherein the DCI is based on a configuration for UE-initiated CSI reporting and/or the transmission request.

Aspect 18: A program stored on a storage medium and including code instructions, which, when executed on one or more processors of an user equipment, UE, cause the one or more processors to execute the following steps: transmitting a transmission request for reporting an UE-initiated channel state information, CSI, report to a network node; determining in a first determination, whether the transmission request is successful or not; and determining, in a second determination, based on the first determination, whether to retransmit the transmission request.

Aspect 19: A program stored on a storage medium and including code instructions, which, when executed on one or more processors of a network node, cause the one or more processors to execute the following steps: receiving, from a user equipment, UE, a transmission request for reporting an UE-initiated channel state information, CSI; obtaining, a DCI for transmission to the UE, wherein the DCI is based on a configuration for UE-initiated CSI reporting and/or the transmission request.

Summarizing, the disclosure relates to a user equipment, a network node device, and respective methods for a user equipment and a network node. More specifically, the user equipment comprises a transceiver and a circuitry. The transceiver, in operation, transmits a transmission request for reporting an UE-initiated channel state information, CSI, report to a network node. The circuitry, in operation, determines, in a first determination, whether the transmission request is successful or not, determines, in a second determination, based on the first determination, whether to retransmit the transmission request.

## Claims

1. A user equipment, UE, comprising:
a transceiver, which in operation:
transmits a transmission request for reporting an UE-initiated channel state information, CSI, report to a network node,
circuitry, which in operation:
determines, in a first determination, whether the transmission request is successful or not,
determines, in a second determination, based on the first determination, whether to retransmit the transmission request.

2. The UE according to claim 1, wherein the transceiver, in operation, further receives a DCI from the network node; and
the circuitry, in operation, further determines if the received DCI matches the transmission request, and
wherein the first determination is based on the determining if the received DCI matches the transmission request.

3. The UE according to any of the claims 1 or 2, wherein the circuitry, in operation, starts a first timer upon transmitting the transmission request, and
if the first timer expires without the transceiver, in operation, receiving a DCI, the circuitry, in operation, determines that the transmission request for reporting is unsuccessful.

4. The UE according to claim 3, wherein the transceiver, in operation, further receives a DCI from the network node before the first timer expires,
the circuity, in operation, determines that the transmission request for reporting is successful, if the received DCI matches the transmission request; and
determines that the transmission request for reporting is unsuccessful, if the received DCI does not match the transmission request.

5. The UE according to any of the claims 2 to 4, wherein the circuity, in operation, determines that the received DCI matches the transmission request if the received DCI includes an indication for being a response to the transmission request.

6. The UE according to any of the claims 2 to 4, wherein the circuity, in operation, determines that the received DCI matches the transmission request if the received DCI includes a CSI request for information that includes the information included in the UE-initiated CSI report.

7. The UE according to any of the claims 1 to 6,wherein, in case the transmission request for reporting is successful, the circuitry, in operation,
determines, in the second determination, to omit a retransmission of the transmission request for reporting.

8. The UE according to any of the claims 1 to 6, wherein, in case the transmission request for reporting is unsuccessful, the circuitry, in operation,
determines, in the second determination, to omit a retransmission of the transmission request for reporting, if at least one condition out of a set of one or more conditions is fulfilled.

9. The UE according to claim 8, wherein
the set of one or more conditions includes a condition that is fulfilled, if the transceiver, in operation, receives a scheduling DCI including a CSI request, before the first timer expires; and
the transceiver, in operation, transmits the requested CSI report using the resources scheduled in the DCI.

10. The UE according to claim 8, wherein
the set of one or more conditions includes a condition that is fulfilled, if the transceiver, in operation, receives a scheduling DCI before the first timer expires; and
the transceiver, in operation, transmits the UE-initiated CSI report using the resources scheduled in the DCI.

11. The UE according to any of the claims 8 to 10, wherein the circuitry, in operation, starts a second timer upon transmitting the transmission request; and
the set of one or more conditions includes a condition that is fulfilled, if the second timer is expired.

12. The UE according to any of the claims 8 to 11, wherein the circuitry, in operation, counts a number of retransmissions of the transmission request,
the set of one or more conditions includes a condition that is fulfilled, if the number of retransmissions is greater than a preconfigured threshold.

13. A network node comprising:
a transceiver, which in operation:
receives, from a user equipment, UE, a transmission request for reporting an UE-initiated channel state information, CSI;
circuitry, which in operation:
obtains a DCI for transmission to the UE, wherein the DCI is based on a configuration for UE-initiated CSI reporting and/or the transmission request.

14. A method for a user equipment, UE, for handling a transmission request for reporting an UE-initiated CSI report, the method comprising:
- transmitting a transmission request for reporting an UE-initiated channel state information, CSI, report to a network node;
- determining in a first determination, whether the transmission request is successful or not; and
- determining, in a second determination, based on the first determination, whether to retransmit the transmission request.

15. A method for a network node for handling a transmission request for reporting an UE-initiated CSI report, the method comprising:
- receiving, from a user equipment, UE, a transmission request for reporting an UE-initiated channel state information, CSI;
- obtaining, a DCI for transmission to the UE, wherein the DCI is based on a configuration for UE-initiated CSI reporting and/or the transmission request.
